# EUROPEAN PATENT APPLICATION

(11) **EP 4 304 291 A1**
(43) Date of publication of application: **10.01.2024**
(21) Application number: 22762567.0
(22) Date of filing: 02.03.2022
(51) Int. Cl.: H04W 76/19

(54) **SERVICE NOTIFICATION METHOD, APPARATUS AND DEVICE, AND READABLE STORAGE MEDIUM**

(30) Priority: 05.03.2021 CN 202110247442
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: XIE, Fang, Beijing 100053 (CN)
(74) Representative: GPI Brevets
(86) International application number: PCT/CN2022/078860
(87) International publication number: WO 2022/184104

(57) **Abstract**

A service notification method, apparatus, device and a readable storage medium are provided. The method includes: sending a notification message, wherein the notification message indicates that at least one MBS which has previously entered an inactive state transits to an active state.

## Description

### CROSS-REFERENCE TO RELATED APPLICATION

This application is filed based on and claims the priority of the Chinese patent application No. 202110247442.6 filed on March 5, 2021, the disclosure of which are incorporated herein by reference in their entirety.

### TECHNICAL FIELD

The present application relates to the technical field of communications, and in particular, to a service notification method, an apparatus, a device, and a readable storage medium.

### BACKGROUND

Multicast/Broadcast Services (MBS, also referred to as Multicast-Broadcast Services) are technologies for transmitting data from a data source to a plurality of target terminals, thereby realizing sharing of resources of networks (including a core network and an access network), and improving a utilization rate of network resources, especially air interface resources.

Since deployment of an MBS service by a Long Term Evolution (LTE) multicast Broadcast Single Frequency Network (MBSFN) is less flexible and causes a relatively high resource waste, MBS deployment of a 5th generation (5G) mobile communication technology may not be performed according to the MBSFN, that is, support to the MBS is implemented per cell granularity. The base station determines, according to information such as the number of terminals (such as User Equipment (UE)) receiving the MBS service in a cell. Transmission of the MBS service supports both a UE in a connected state and a UE in an idle state or in inactive state.

When the MBS service is paused or ended, in order to save power consumption of a network and the UE, a core network may notify the base station and the UE that the MBS service enters an inactive state. In this case, if no other service is to be received by the UE, the UE may enter the idle state or the inactive state. When the MBS service is recovered, the core network side notifies the base station and the UE to resume reception of the MBS service.

When the MBS service enters the inactive state, mobility management of the UE, including handover of the connected state and reselection of the idle state or the inactive state, returns to a scene of a unicast service, i.e., based on a measured value of the UE. When the MBS service is restored and activated, how the network side considers a situation of restoring the MBS service to perform the mobility management of the UE is an urgent problem to be solved.

### SUMMARY

Embodiments of the present application provide a service notification method, an apparatus, a device, and a readable storage medium, which at least solve the problem of how to perform mobility management of a LTE according to a situation of restoring an MBS service.

In a first aspect, a service notification method performed by a first network device is provided. The method includes sending a notification message, wherein the notification message indicates that at least one Multicast/Broadcast Service (MBS) which is in an inactive state transits to an active state.

In some optional embodiments, sending the notification message includes: sending a first message to a second network device, wherein the first message indicates that the at least one MBS which is in the inactive state transits to the active state.

In some optional embodiments, the first message indicates that the at least one MBS which is in the inactive state transits to the active state in a first cell, the first network device is a network device of a core network, and the second network device is a network device to which the first cell belongs.

In some optional embodiments, the first message carries a time length of activation of the at least one MBS.

In some optional embodiments, sending the notification message includes: sending a second message to a third network device, wherein the second message indicates that the at least one MBS which is in the inactive state transits to the active state, wherein the third network device is a network device to which a second cell belongs, a terminal in the second cell receives the at least one MBS.

In some optional embodiments, the second message indicates that the at least one MBS which is in the inactive state transits to the active state in the first cell.

In some optional embodiments, the third network device or the second cell does not support the at least one MBS or the at least one MBS is not in a MBS list supported by the third network device or the second cell.

In some optional embodiments, the second message includes one or more of following: a time length of activation of the at least one MBS; information of the first cell, the information of the first cell indicating that the at least one MBS transits to the active state in the first cell; information of a network device to which the first cell belongs; time information of receiving the at least one MBS; frequency domain information of receiving the at least one MBS.

In some optional embodiments, sending the notification message includes: sending a fourth message to a terminal through a Non-Access Stratum (NAS) or paging message, wherein the fourth message indicates that the at least one MBS which is in the inactive state transits to the active state.

In some optional embodiments, the fourth message indicates that the at least one MBS which is in the inactive state transits to the active state in the first cell.

In some optional embodiments, sending the fourth message to the terminal through the NAS or paging message includes: send the fourth message to the terminal in the first cell or the second cell through the NAS or paging message.

In some optional embodiments, the fourth message further includes: list information of one or more cells supporting the at least one MBS.

In a second aspect, a service notification method performed by a second network device is provided. The method includes: receiving a notification message, wherein the notification message indicates that at least one Multicast/Broadcast Service (MBS) which is in an inactive state transits to an active state, wherein the second network device is a network device to which the first cell belongs.

In some optional embodiments, the notification message indicates that at least one MBS which is in an inactive state transits to an active state in a first cell.

In some optional embodiments, receiving the notification message includes: receiving the first message sent by a first network device, wherein the first message indicates that the at least one MBS which is in the inactive state transits to the active state, wherein the first network device is a network device of a core network; or, receiving a tenth message sent by a terminal in the first cell, wherein the tenth message indicates that the at least one MBS which is in the inactive state transits to the active state.

In some optional embodiments, the first message or the tenth message indicates that the at least one MBS which is in the inactive state transits to the active state in the first cell.

In some optional embodiments, the method further includes: sending a second message to a third network device, wherein the second message indicates that the at least one MBS which is in the inactive state transits to the active state, wherein the third network device is a network device to which the second cell belongs, and at least part of terminals in the second cell receives the at least one MBS.

In some optional embodiments, the second message indicates that the at least one MBS which is in the inactive state transits to the active state in the first cell.

In some optional embodiments, the method further includes: receiving a handover request message or a conditional handover request message sent by a third network device, wherein the handover request message or the conditional handover request message carries a handover reason; and sending handover configuration information to the third network device.

In some optional embodiments, the handover configuration information includes one or more of following: configuration of receiving the at least one MBS, a manner of receiving the at least one MBS being Point To Point (PTP) or Point To Multipoint (PTM).

In some optional embodiments, the third network device or the second cell does not support the at least one MBS, or the at least one MBS is not in a MBS list in the third network device or the second cell.

In a third aspect, a service notification method performed by a third network device is provided. The method includes: receiving a notification message, wherein the notification message indicates that at least one Multicast/Broadcast Service (MBS) which is in an inactive state transits to a active state, wherein the third network device is a network device to which a second cell belongs, and at least part of terminals in a second cell receives the at least one MBS.

In some optional embodiments, the notification message indicates that at least one MBS which is in an inactive state transits to a active state in a first cell.

In some optional embodiments, the third network device or the second cell does not support the at least one MBS, or the at least one MBS is not in a MBS list supported by the third network device or the second cell.

In some optional embodiments, receiving the notification message includes: receiving a second message sent by a first network device or a second network device, wherein the second message indicates that the at least one MBS which is in the inactive state transits to the active state; wherein the first network device is a network device of a core network, and the second network device is a network device to which the first cell belongs.

In some optional embodiments, the second message indicates that the at least one MBS which is in the inactive state transits to the active state in the first cell.

In some optional embodiments, the method further includes: determining that at least part of the terminals in the second cell is capable of being handed over to the first cell, wherein a state of the at least part of the terminals is a connected state, and the at least part of the terminals expects to receive at least one MBS or is interested in at least one MBS.

In some optional embodiments, determining that at least part of the terminals in the second cell is capable of being handed over to the first cell includes: determining, according to one or more measurement results reported by one or more terminals in the second cell and/or information about whether the second cell supports the at least one MBS, that the at least part of the terminals in the second cell is capable of being handed over to the first cell.

In some optional embodiments, the method further includes: sending an eighth message to a first terminal in a connected state in the second cell, wherein the eighth message indicates that the at least one MBS which is in the inactive state transits to the active state, or the eighth message indicates that the at least one MBS which is in the inactive state transits to the active state in the first cell.

In some optional embodiments, the method further includes: sending a handover request message or a conditional handover request message to the second network device, wherein the handover request message or the conditional handover request message carries a handover reason; and receiving handover configuration information configured by the second network device.

In some optional embodiments, the method further includes: sending a ninth message to the first terminal, wherein the ninth message comprises one or more of following: handover configuration information; a handover reason; an event for conditional handover configured by the third network device to the first terminal, and a threshold value corresponding to the event.

In some optional embodiments, the handover configuration information includes one or more of the following: configuration of receiving at least one MBS, a manner of receiving the at least one MBS being PTP or PTM.

In some optional embodiments, the method further includes: sending a third message to a second terminal in a second cell, wherein the third message indicates that the at least one MBS which is in the inactive state transits to the active state, or the third message indicates that the at least one MBS which is in the inactive state transits to the active state in the first cell.

In some optional embodiments, the third message includes one or more of following: a parameter of cell reselection of a second terminal receiving the at least one MBS; a manner of receiving the at least one MBS; a resource of receiving the at least one MBS; time information of receiving the at least one MBS; frequency domain information of receiving the at least one MBS.

In some optional embodiments, receiving the notification message includes: receiving a fifth message sent by a third terminal, wherein the fifth message indicates that the at least one MBS which is in the inactive state transits to the active state.

In some optional embodiments, the fifth message indicates that the at least one MBS which is in the inactive state transits to the active state in the first cell; wherein the fifth message comprises one or more of following: a cell list supporting at least one MBS, and one or more measurement results of measuring one or more cells in the cell list by the third terminal.

In some optional embodiments, the method further includes: in a case that the third network device fails to receive a cell list supporting the at least one MBS, sending a sixth message to the first cell or the second network device, wherein the sixth message indicates querying whether the first cell supports at least one MBS.

In some optional embodiments, the method further includes: in a case that the third network device receives a cell list supporting at least one MBS, sending a seventh message to a second network device to which the first cell supporting the at least one MBS belongs, wherein the seventh message indicates querying whether the third terminal is capable of being handed over to the first cell.

In some optional embodiments, the method further includes: in a case that the second network device replies that the first cell supports the at least one MBS, handing over the third terminal to the first cell.

In some optional embodiments, the third network device or the second cell does not support the at least one MBS or the at least one MBS is not in a MBS list supported by the third network device or the second cell.

In a fourth aspect, a service notification method performed by a terminal is provided. The method includes: receiving a fourth message sent by a first network device through a Non-Access Stratum (NAS) or paging message, wherein the fourth message indicates that at least one Multicast/Broadcast Service (MBS) which is in an inactive state transits to an active state.

In some optional embodiments, the fourth message indicates that at least one MBS which is in an inactive state transits to an active state in a first cell.

In some optional embodiments, the method further includes: sending a fifth message to a third network device of a second cell, wherein the fifth message indicates that the at least one MBS which is in the inactive state transits to the active state, and at least part of terminals in the second cell receives the at least one MBS.

In some optional embodiments, the fifth message indicates that the at least one MBS which is in the inactive state transits to the active state in the first cell.

In a fifth aspect, a service notification apparatus applied to a first network device is provided. The apparatus includes: a first sending module configured to send a notification message, wherein the notification message indicates that at least one Multicast/Broadcast Service (MBS) which is in an inactive state transits to an active state.

In a sixth aspect, a service notification apparatus applied to a second network device is provided. The apparatus includes: a first receiving module configured to receive a notification message, wherein the notification message indicates that at least one Multicast/Broadcast Service (MBS) which is in an inactive state transits to an active state, wherein the second network device is a network device to which the first cell belongs.

In a seventh aspect, a service notification apparatus applied to a third network device is provided. The apparatus includes: a second receiving module configured to receive a notification message, wherein the notification message indicates that at least one Multicast/Broadcast Service (MBS) which is in an inactive state transits to a active state, wherein the third network device is a network device to which a second cell belongs, and at least part of terminals in a second cell receives the at least one MBS.

In an eighth aspect, a service notification apparatus applied to a terminal is provided. The apparatus includes: a ninth sending module configured to receive a fourth message sent by a first network device through a Non-Access Stratum (NAS) or paging message, wherein the fourth message indicates that at least one Multicast/Broadcast Service (MBS) which is in an inactive state transits to an active state in a first cell.

In a ninth aspect, a network device is provided. The network device includes a processor, a memory, and a program stored on the memory and executable on the processor, wherein when the program is executed by the processor, steps of the method according to the first aspect are implemented; or, when the program is executed by the processor, steps of the method according to the second aspect are implemented; or, when the program is executed by the processor, steps of the method according to the third aspect are implemented.

In a tenth aspect, a terminal is provided. The terminal includes: a processor, a memory, and a program stored on the memory and executable on the processor, wherein when the program is executed by the processor, the processor implements the steps of the method according to the fourth aspect.

In an eleventh aspect, a readable storage medium is provided, wherein a program is stored on the readable storage medium, and when the program is executed by a processor, steps of the method according to the first aspect are implemented; or, when the program is executed by a processor, steps of the method according to the second aspect are implemented; or, when the program is executed by a processor, steps of the method according to the third aspect are implemented; or, when the program is executed by a processor, steps of the method according to the fourth aspect are implemented.

In this embodiment of the present application, the network side may send a notification message to the base station or the UE, to indicate that the MBS which previously has entered in the inactive state transits to the active state, or even further indicates cells in which the MBS having entered previously the inactive state transits to the active state, so that the network side may perform mobility management of the UE according to the situation of restoring the MBS service, thereby helping a UE which desires to receive at least one MBS or is interested in at least one MBS to quickly recover reception of the at least one MBS.

Further, a UE which desires to receive at least one MBS or is interested in at least one MBS may also be notified and perform mobility management such as handover, in a case that a cell or a base station which the UE camps in or the UE is connected with does not support the at least one MBS service. In this way, the UE can receive the at least one MBS in time, and the LTE in the base station or the cell not supporting the at least one MBS service may quickly recover the reception of the at least one MBS.

### BRIEF DESCRIPTION OF THE DRAWINGS

Various other advantages and benefits will become apparent to those of ordinary skill in the art by reading detailed description of optional embodiments below. The drawings are only used to illustrate objectives of optional embodiments, and are not considered to be limiting of the present application. Moreover, in the entire drawings, the same reference symbols are used to represent the same components.
FIG. 1 is a flowchart of an MBS service deactivation process;
FIG. 2 is a first flowchart of a service notification method according to some embodiments of the present application;
FIG. 3 is a second flowchart of a service notification method according to some embodiments of the present application;
FIG. 4 is a third flowchart of a service notification method according to some embodiments of the present application;
FIG. 5 is a fourth flowchart of a service notification method according to some embodiments of the present application;
FIG. 6 is a fifth flowchart of a service notification method according to some embodiments of the present application;
FIG. 7 is a sixth flowchart of a service notification method according to some embodiments of the present application;
FIG. 8 is a first schematic diagram of a service notification apparatus according to some embodiments of the present application;
FIG. 9 is a second schematic diagram of a service notification apparatus according to some embodiments of the present application;
FIG. 10 is a third schematic diagram of a service notification apparatus according to some embodiments of the present application;
FIG. 11 is a fourth schematic diagram of a service notification apparatus according to some embodiments of the present application;
FIG. 12 is a schematic diagram of a network device according to some embodiments of the present application;
FIG. 13 is a schematic diagram of a terminal according to some embodiments of the present application.

### DETAILED DESCRIPTION

The technical solutions in the embodiments of the present application will be clearly and completely described below with reference to the accompanying drawings in the embodiments of the present application. It is clear that the described embodiment are only a part, rather than all, of the embodiments of the present application. All other embodiments obtained by a person of ordinary skill in the art based on the embodiments of the present application without creative efforts shall fall within the protection scope of the present application.

The terms "including" and any variations thereof in the specification and claims of the present application are intended to cover non-exclusive inclusion, for example, processes, methods, systems, products, or devices including a series of steps or units are not necessarily limited to those steps or units clearly listed, but may include other steps or units not expressly listed or inherent to these processes, methods, products, or devices. In addition, using "and/or" in the specification and in the claims indicates that at least one of connected objects, such as A and/or B, indicating that there are three cases including a case that A exits alone, B exists alone, and both A and B exist.

In this embodiment of the present application, words such as "exemplary" or "for example" are used to represent an example, an illustration, or a description. Any embodiment or design scheme described as "exemplary" or "for example" in the embodiments of the present application should not be construed as being more preferred or more advantageous than other embodiments or design schemes. Rather, using "exemplary" or "e.g.," is intended to present related concepts in a particular manner.

It should be noted that techniques described herein are not limited to Long Term Evolution (LTE)/ LTE-Advanced (LTE-A) systems, and may also be used in other wireless communication systems such as Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA), and other systems. The terms "system" and "network" are often used interchangeably. The described techniques may be used both for the systems and the radio technologies mentioned above, as well as other systems and radio technologies. However, the following description describes New Radio (NR) systems for illustrative purposes, and NR terms are used in most of the following description, although these techniques may also be applied to applications other than NR system applications, such as 6th generation (6G) communication systems.

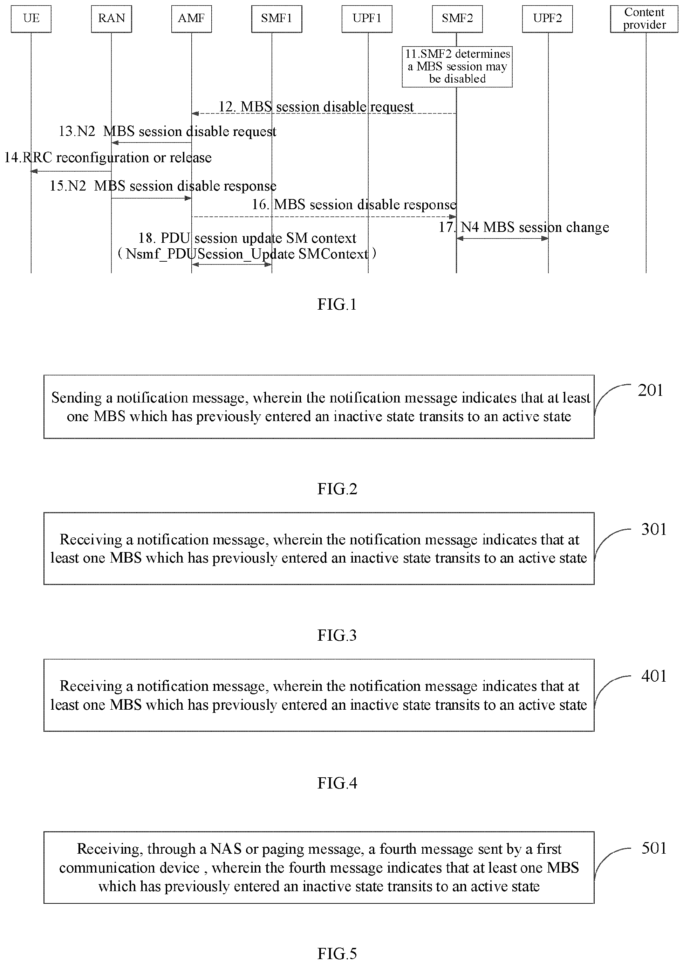

Before the embodiments of the present application are described in detail, a deactivation process of a MBS service is first briefly described. Referring to FIG. 1, specific steps of the processor are as follows:
Step 11: A Session Management Function (SMF) 2 determines that a MBS session may be disabled.
Step 12: The SMF 2 sends an MBS session disable request to an Access and Mobility Management Function (AMF).
Step 13: The AMF sends an N2 MBS session disable request to a Radio Access Network (RAN).
Step 14: The RAN sends a Radio Resource Control (RRC) reconfiguration or release to a LTE.
Step 15: The RAN sends an N2 MBS session disable response to the AMF.
Step 16: The AMF sends an N2 MBS session disable response to the SMF 2.
Step 17: A N4 MBS session change is performed between the SMF 2 and a User Plane Function (UPF) 2.
Step 18: PDU Session Update SM Context (Nsmf PDUSession Update SMContext) is performed between SMF 1 and the AMF.

Referring to FIG. 2, an embodiment of the present application provides a service notification method, an entity of executing the method is a first network device, and specific steps of the method include:
Step 201: sending a notification message, wherein the notification message indicates that at least one MBS which is in an inactive state transits to an active state.

In an embodiment of the present application, the step of sending the notification message includes: sending a first message to a second network device, wherein the first message indicates that at least one MBS which has previously entered the inactive state transits to an active state; or, the first message indicates that at least one MBS which has previously entered the inactive state transits to an active state in a first cell.

The first network device is a network device of a core network. Optionally, the core network device includes, but is not limited to, one of an Access and Mobility Management function (AMF) or a Session Management Function (SMF) or a User Plane Function (UPF), and the second network device is a network device to which the first cell belongs.

Optionally, the first message may include an identifier of an activated MBS, such as an identifier of a session or an identifier of a group.

Optionally, the first message carries a time length of activation of the at least one MBS.

In another embodiment of the present application, the step of sending a notification message includes: sending a second message to a third network device, wherein the second message indicates that at least one MBS which is in an inactive state transits to the active state; or, the second message indicates that at least one MBS which is in the inactive state transits to the active state in the first cell.

The first network device is a network device of the core network; the third network device is a network device to which a second cell belongs, at least part of terminals in the second cell receives the at least one MBS.

Optionally, the third network device or the second cell does not support the at least one MBS or the at least one MBS is not in a MBS list supported by the third network device or the second cell.

Optionally, the second message may include a related identifier of an activated MBS, such as an identifier of a session or an identifier of a group.

Optionally, the second message may include one or more of the following:
(1) a time length of activation of at least one MBS;
(2) information of the first cell indicates that at least one MBS transits to the active state in the first cell;
(3) information of a network device to which the first cell belongs;
(4) time information of receiving the at least one MBS;
(5) frequency domain information of receiving the at least one MBS.

In still another embodiment of the present application, the step of sending the notification message includes: sending a fourth message to a terminal through a Non-Access Stratum (NAS) or paging message, wherein the fourth message indicates that at least one MBS which is in the inactive state transits to the active state; or, the fourth message indicates that the at least one MBS which is in the inactive state transits to the active state in the first cell.

Optionally, the first network device may send a fourth message to a terminal in the first cell or the second cell by using an NAS message or a paging message.

Optionally, the fourth message may include a related identifier of the activated MBS, such as an identifier of a session or an identifier of a group.

Optionally, the fourth message may further include: list information of one or more cells supporting the at least one MBS.

In this embodiment of the present application, the network side may send the notification message to indicate that the MBS which is in the inactive state transits to the active state, so as to help the UE to quickly restore reception of the at least one MBS, thereby implementing mobility management of the LTE according to a situation of restoring the MBS service.

Referring to FIG. 3, an embodiment of the present application further provides a service notification method, a subject of executing the method may be a second network device, such as a network device of an access network, and specific steps of the method include:
Step 301: receiving a notification message, wherein the notification message indicates that at least one MBS which is in the inactive state transits to the active state, wherein the second network device is a network device to which the first cell belongs, for example, the second network device is a base station to which the first cell belongs.

Optionally, the notification message indicates that at least one MBS which is in the inactive state transits to the active state in the first cell.

In an embodiment of the present application, the step of receiving the notification message includes: receiving the first message sent by a first network device, wherein the first message indicates that at least one MBS which is in the inactive state transits to the active state, or the first message indicates the at least one MBS which is in the inactive state transits to the active state in the first cell, the first network device is a network device of the core network; or, receiving a tenth message sent by a terminal in the first cell, wherein the tenth message indicates that the at least one MBS which is in the inactive state transits to the active state, or the tenth message indicates that the at least one MBS which is in the inactive state transits to the active state in the first cell.

Optionally, the first message may include an identifier of an activated MBS, such as an identifier of a session or an identifier of a group.

Optionally, the tenth message may include a related identifier of the activated MBS, such as an identifier of a session or an identifier of a group.

In an embodiment of the present application, the method further includes: sending a second message to a third network device, wherein the second message indicates that at least one MBS which is in the inactive state transits to the active state, or the second message indicates that at least one MBS which is in the inactive state transits to the active state in the first cell, wherein the third network device is a network device to which the second cell belongs, and at least part of the terminals in the second cell receives the at least one MBS.

Optionally, the second message may include a related identifier of the activated MBS, such as an identifier of a session or an identifier of a group.

In an implementation of the present application, the method further includes: receiving a handover request message or a conditional handover request message sent by a third network device, wherein the handover request message or the conditional handover request message carries a handover reason; and sending handover configuration information to the third network device.

In implementation of the present application, the handover configuration information includes one or more of following: a random access resource dedicated to the first terminal or a random access resource configured for conditional handover, configuration of receiving the at least one MBS, a manner of receiving the at least one MBS being Point To Point (PTP) or Point To Multipoint (PTM).

Optionally, the third network device or the second cell does not support the at least one MBS or the at least one MBS is not in the MBS list in the third network device or the second cell.

In this embodiment of the present application, the network side may send the notification message to indicate that the MBS which is in the inactive state transits to the active state in the first cell, so as to help the LTE to quickly restore the reception of the at least one MBS, thereby implementing mobility management of the LTE according to the situation of restoring the MBS service.

Referring to FIG. 4, an embodiment of the present application provides a service notification method, an entity of executing the method may be a third network device, such as a network device of the access network, and specific steps of the method include:
Step 401: receiving a notification message, wherein the notification message indicates that at least one MBS which is in the inactive state transits to the active state.

The third network device is a network device to which the second cell belongs, and at least part of the terminals in the second cell receives the at least one MBS.

Optionally, the notification message indicates that at least one MBS which is in the inactive state transits to the active state in the first cell.

Optionally, the third network device or the second cell does not support the at least one MBS or the at least one MBS is not in the MBS list supported by the third network device or the second cell.

In an embodiment of the present application, the step of receiving the notification message includes: receiving a second message sent by the first network device or the second network device, wherein the second message indicates that at least one MBS which is in the inactive state transits to the active state; or the second message indicates that at least one MBS which is in the inactive state transits to the active state in the first cell.

The first network device is a network device of the core network, and the second network device is a network device to which the first cell belongs.

Optionally, the second message may include a related identifier of the activated MBS, such as an identifier of a session or an identifier of a group.

In an embodiment of the present application, the method further includes: determining that at least part of the terminals in the second cell can be handed over to the first cell, wherein a state of the at least part of the terminals is a connected state, and the at least part of the terminals expects to receive at least one MBS or is interested in at least one MBS.

In an embodiment of the present application, the step of determining that at least part of the terminals in the second cell can be handed over to the first cell includes: determining, according to one or more measurement results reported by one or more terminals in the second cell and/or information about whether the second cell can support the at least one MBS, that the at least part of the terminals in the second cell can be handed over to the first cell.

In an embodiment of the present application, the method further includes: sending an eighth message to a first terminal in a connected state in the second cell, wherein the eighth message indicates that at least one MBS which is in the inactive state transits to the active state, or the eighth message indicates that at least one MBS which is in the inactive state transits to the active state in the first cell.

Optionally, the eighth message may include a related identifier of the activated MBS, such as an identifier of a session or an identifier of a group.

In an embodiment of the present application, the method further includes: receiving a measurement result of the first cell reported by the first terminal.

In an embodiment of the present application, the method further includes: sending a handover request message or a conditional handover request message to the second network device, wherein the handover request message or the conditional handover request message carries a handover reason; and receiving handover configuration information configured by the second network device.

In an embodiment of the present application, the method further includes: sending a ninth message to the first terminal, wherein the ninth message may include one or more of the following:
(1) handover configuration information;
(2) a handover reason;
(3) an event for conditional handover configured by the third network device to the first terminal, and a threshold value corresponding to the event.

Optionally, the handover configuration information may include one or more of the following: a random access resource dedicated to the first terminal or a random access resource for conditional handover, configuration of receiving at least one MBS, a PTP or PTM of at least one MBS.

In an embodiment of the present application, the method further includes: sending a third message to a second terminal in an idle state or an inactive state in a second cell, wherein the third message indicates that at least one MBS which is in the inactive state transits to the active state, or the third message indicates that at least one MBS which is in the inactive state transits to the active state in the first cell.

Optionally, the third message may include a related identifier of the activated MBS, such as an identifier of a session or an identifier of a group.

Optionally, the third message includes one or more of the following:
(1) a parameter of cell reselection of a second terminal receiving at least one MBS;
(2) a manner of receiving the at least one MBS;
(3) a resource of receiving the at least one MBS;
(4) time information of receiving the at least one MBS;
(5) frequency domain information of receiving the at least one MBS.

In another embodiment of the present application, the step of receiving the notification message includes: receiving a fifth message sent by a third terminal in the second cell, wherein the fifth message indicates that at least one MBS which is in the inactive state transits to the active state; or, the fifth message indicates that at least one MBS which is in the inactive state transits to the active state in the first cell.

Optionally, the fifth message may include a related identifier of the activated MBS, such as an identifier of a session or an identifier of a group.

The fifth message includes one or more of following: a cell list supporting at least one MBS, and one or more measurement results of measuring one or more cells in the cell list by the third terminal.

In an embodiment of the present application, the method further includes: when the third network device fails to receive a cell list supporting at least one MBS, sending a sixth message to the first cell or the second network device, wherein the sixth message indicates whether the first cell may support at least one MBS.

Optionally, the sixth message may further include one or more of following: one or more measurement results measured by one or more terminals receiving at least one MBS; and context information of one or more terminals receiving the at least one MBS.

In an embodiment of the present application, the method further includes: in a case that the third network device receives a cell list supporting at least one MBS, sending a seventh message to a second network device to which the first cell supporting the at least one MBS belongs, and querying whether the third terminal may be handed over to the first cell.

In an embodiment of the present application, the method further includes: in a case that the second network device replies that the first cell supports the at least one MBS, handing over the third terminal to the first cell. Optionally, the third network device or the second cell does not support the at least one MBS or the at least one MBS is not in the MBS list supported by the third network device or the second cell.

In this embodiment of the present application, the network side may send the notification message to indicate that the MBS which is in the inactive state transits to the active state, so as to help the UE to quickly restore the reception of the at least one MBS, so that the network side may perform mobility management of the LTE according to the situation of restoring the MBS service.

Referring to FIG. 5, an embodiment of the present application provides a service notification method, an entity of executing the method is a terminal, and the specific steps of the method include:
Step 501: receiving a fourth message sent by a first network device through a Non-Access Stratum (NAS) or paging message, wherein the fourth message indicates that at least one MBS which is in the inactive state transits to the active state.

Optionally, the fourth message indicates that the at least one MBS which is in the inactive state transits to the active state in the first cell.

Optionally, the fourth message may include a related identifier of the activated MBS, such as an identifier of a session or an identifier of a group.

In an embodiment of the present application, the method further includes: sending a fifth message to a third network device of a second cell, wherein the fifth message indicates that at least one MBS which is in the inactive state transits to the active state, or the fifth message indicates that at least one MBS which is in the inactive state transits to the active state in the first cell, and at least part of the terminals in the second cell needs to restore receiving the at least one MBS.

Optionally, the fifth message may include a related identifier of the activated MBS, such as an identifier of a session or an identifier of a group.

In this embodiment of the present application, the network side may send the notification message to indicate that the MBS which is in the inactive state transits to the active state, so as to help the UE to quickly restore the reception of the at least one MBS, so that the network side may perform mobility management of the LTE according to the situation of restoring the MBS service.

The service notification method in the embodiments of the present application is described in detail below with reference to specific examples.

### Example one

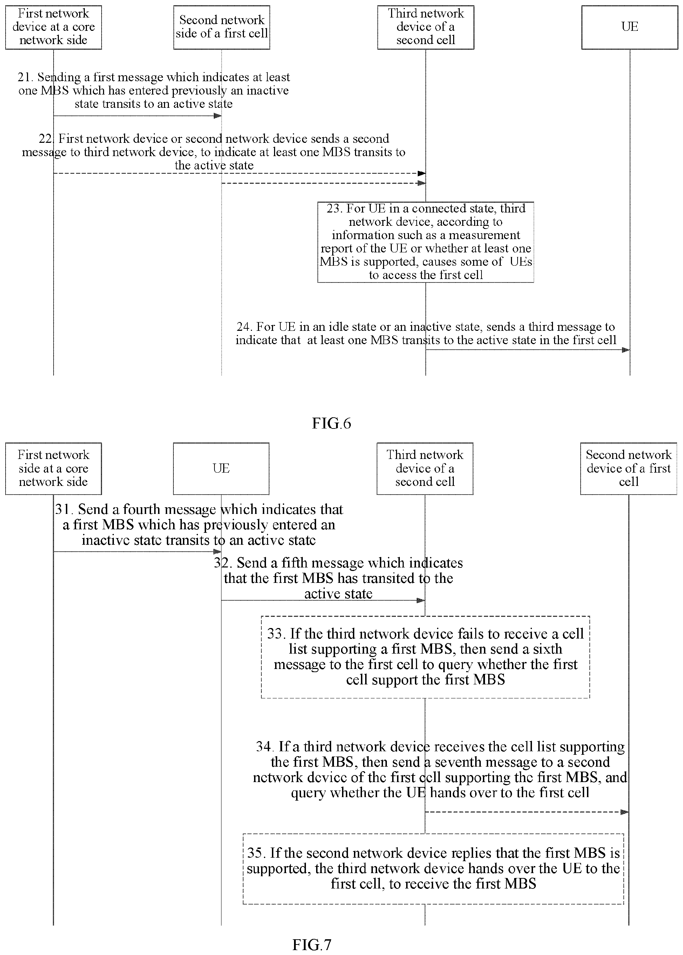

This example is a network-side notification scheme. Referring to FIG. 6, the specific steps are as follow.

Step 21: the first network device (or referred to as a network device at a core network side) sends a first message to a second network device (or referred to as a network device of an access network or a network device of a first cell), wherein the first message indicates that at least one MBS (or referred to as MBS 1) which has entered previously the inactive state transits to the active state.

Optionally, the first network device includes, but is not limited to, one of the following: an AMF or an SMF or a UPF.

Optionally, the second network device may be a base station or another network device in a first cell (or referred to as cell A) supporting the at least one MBS.

Optionally, the first message may further carry a time length (T) of activation of at least one MBS.

Step 22: the first network device (or referred to as a network device of a core network) sends a second message to a third network device (or referred to as a network device in a second cell), or the second network device (or referred to as a network device in a first cell) sends a second message to a third network device (or referred to as a network device in a second cell), the second message indicates that at least one MBS which is in the inactive state transits to the active state.

Optionally, the third network device includes a network device that does not support at least one MBS.

Optionally, the second message includes one or more of following:
(1) a time length of activation of at least one MBS;
(2) information of the first cell which indicates that at least one MBS in the first cell transits to the active state;
(3) information of a network device in the first cell;
(4) time information of receiving at least one MBS;
(5) frequency domain information of receiving at least one MBS.

Step 23: For a UE (which may be referred to as a first terminal) in a connected state in the second cell, the third network device, according to information such as a measurement report of the UE and whether the UE may support at least one MBS, causes some of the UEs in the second cell to hand over to the first cell.

Optionally, the third network device may obtain, by using UE context information provided by a neighboring cell in a handover process or information actively reported by the UE, whether the UE may support the at least one MBS.

If the measurement result of the second cell by the UE is slightly better than the measurement result of the first cell, but the first cell supports the at least one MBS desired by the UE, and the second cell does not support the at least one MBS, the UE is handed over to the first cell, so that the LTE receives the at least one MBS as soon as possible.

For example, step 23 may be implemented in the following specific manner:
(1) The third network device sends an eighth message (such as a reconfiguration message, a broadcast message, etc.) to the first terminal in the connected state in the second cell, wherein the eighth message indicates that at least one MBS which is in the inactive state transits to the active state, and further, the eighth message indicates that at least one MBS which is in the inactive state transits to the active state in the first cell.

Optionally, after receiving the eighth message, the first terminal actively reports a measurement result of the first cell.

(2) The third network device sends a handover message or a conditional handover message to the first terminal in the second cell, wherein the handover message or the conditional handover message carries a handover reason, such as receiving at least one MBS in the first cell.

(3) The second network device performs admission control, the second network device configures handover configuration information, and sends the handover configuration information to the third network device, wherein the handover configuration information is used by the UE to hand over to the first cell to receive the at least one MBS.

Optionally, the handover configuration information includes one or more of following: a random access resource dedicated to the first terminal or a random access resource used for conditional handover, configuration of receiving at least one MBS, PTP or PTM information of at least one MBS.

(4) The third network device sends a ninth message to the first terminal, wherein the ninth message includes handover configuration information, optionally, the ninth message may further include a handover reason of the first terminal, for example, receiving at least one MBS or at least one MBS restoring activation. If conditional handover is configured to the UE, the ninth message may further include an event for conditional handover configured by the third network device to the first terminal, and a threshold value corresponding to the event, for example, the third network device configures, to the first terminal, an event (such as A3 event and/or A5 event) of accessing a neighbor cell A, and corresponding threshold values, for example, an offset corresponding to the A3 event, and/or a first threshold value (Threshold1) corresponding to the A5 event, and/or a second threshold value (Threshold2) corresponding to the A5 event.

Step 24: For a UE (which may be referred to as a second terminal) in an idle state or an inactive state in the second cell, the third network device sends a third message to the UE (the second terminal) to indicate that the at least one MBS transits to the active state in the first cell.

Optionally, the third message may be a system message or a paging message.

Optionally, the third message may include one or more of the following:
(1) a parameter of cell reselection for a second terminal that receives at least one MBS;
(2) a manner of receiving at least one MBS;
(3) a resource of receiving at least one MBS; for example, the LTE continues to maintain the idle state or the inactive state, or the UE enters a connected state; further, if the LTE enters a connected state, whether reception is performed in a PTP manner or in a PTM manner, that is, whether a radio bearer (RB) initiated by the UE is a unicast RB or a multicast RB, such as an MBMS radio bearer (MRB);
(4) time information of receiving at least one MBS;
(5) frequency domain information of receiving at least one MBS.

### Example Two

This example is a scheme of UE notification. Referring to FIG. 7, the specific steps are as follow_{∘}

Step 31: a first network device (or referred to as a network device at a core network side) sends a fourth message to a UE in a second cell through a Non-Access Stratum (NAS) or paging message, wherein the fourth message indicates that at least one MBS which is in an inactive state transits to the active state; optionally, the fourth message indicates that at least one MBS which is in the inactive state transits to the active state of the first cell.

If the UE utilizes the NAS (that is, the base station does not perceive reception of a third message activating at least one MBS), optionally, the fourth message may further carry list information of cells supporting the at least one MBS.

Step 32: the LTE sends a fifth message to a third network device (or referred to as a serving base station or a network device in a serving cell or a network device in a second cell), wherein the fifth message indicates that at least one MBS which is in the inactive state transits to the active state; optionally, the fifth message indicates that at least one MBS which is in the inactive state transits to the active state in the first cell.

Optionally, the fifth message includes one or more of following: a cell list supporting at least one MBS, and one or more measurement results of one or more cells in the list of cells measured by the UE.

Step 33: if the third network device fails to receive the cell list supporting the at least one MBS, sending a sixth message to the first cell (or referred to as a neighboring cell) to query whether the first cell may support the at least one MBS.

Optionally, the sixth message includes one or more of following: one or more measurement results measured by one or more terminals receiving at least one MBS; and context information of one or more terminals receiving the at least one MBS.

Step 34: if a third network device receives the cell list supporting at least one MBS, sending a seventh message to a second network device of the first cell supporting the at least one MBS, and querying whether the UE may be handed over to the first cell.

Step 35: if the second network device replies that the at least one MBS is supported, the third network device causes the LTE to hand over to the first cell, to receive the at least one MBS.

It may be understood that the handover process of the third network device in step 35 in the second example may be obtained by referring to step 23 and step 24 in the example 1.

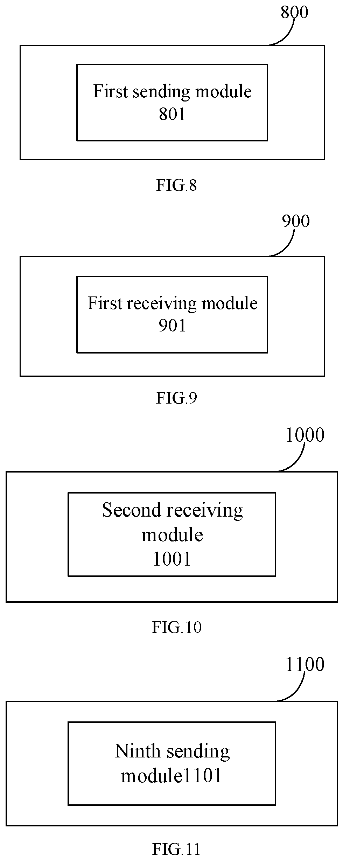

Based on the foregoing embodiments, an embodiment of the present application further provides a service notification apparatus, which is applied to a first network device, and with reference to FIG. 8, the apparatus 800 includes:
a first sending module 801 configured to send a notification message, wherein the notification message indicates that at least one MBS which is in an inactive state transits to an active state.

In an embodiment of the present application, the first sending module 801 is configured to send a first message to a second network device, wherein the first message indicates that at least one MBS which has previously entered the inactive state transits to an active state; or, the first message indicates that at least one MBS which has previously entered the inactive state transits to an active state in a first cell. The first network device is a network device of a core network. The second network device is a network device to which the first cell belongs.

Optionally, the first message carries a time length of activation of the at least one MBS.

In another embodiment of the present application, the first sending module 801 is configured to send a second message to a third network device, wherein the second message indicates that at least one MBS which is in an inactive state transits to the active state; or, the second message indicates that at least one MBS which is in the inactive state transits to the active state in the first cell. The third network device is a network device to which a second cell belongs, at least part of terminals in the second cell receives the at least one MBS.

Optionally, the third network device or the second cell does not support the at least one MBS or the at least one MBS is not in a MBS list supported by the third network device or the second cell.

In an embodiment of the present application, the second message includes one or more of the following:
(1) a time length of activation of at least one MBS;
(2) information of the first cell which indicates that at least one MBS transits to the active state in the first cell;
(3) information of a network device to which the first cell belongs;
(4) time information of receiving the at least one MBS;
(5) frequency domain information of receiving the at least one MBS.

In another embodiment of the present application, the first sending module 801 is configured to send a fourth message to a terminal (such as a terminal in the first cell or the second cell) through a Non-Access Stratum (NAS) or paging message, wherein the fourth message indicates that at least one MBS which is in the inactive state transits to the active state; or, the fourth message indicates that the at least one MBS which is in the inactive state transits to the active state in the first cell.

Optionally, the fourth message may further include: list information of one or more cells supporting the at least one MBS.

The apparatus provided in the embodiments of the present application can implement various steps implemented by the foregoing method embodiments shown in FIG. 2, and can achieve the same technical effect, and in order to avoid repetition, details are not described herein again.

Referring to FIG. 9, an embodiment of the present application further provides a service notification apparatus, applied to a second network device, wherein the apparatus 900 includes:
a first receiving module 901 is configured to receive a notification message, wherein the notification message indicates that at least one MBS which is in the inactive state transits to the active state, or the notification message indicates that at least one MBS which is in the inactive state transits to the active state in the first cell. The second network device is a network device to which the first cell belongs.

In an embodiment of the present application, the first receiving module 901 is configured to: receive the first message sent by a first network device, wherein the first message indicates that at least one MBS which is in the inactive state transits to the active state, or the first message indicates the at least one MBS which is in the inactive state transits to the active state in the first cell, the first network device is a network device of the core network; or, receiving a tenth message sent by a terminal in the first cell, wherein the tenth message indicates that the at least one MBS which is in the inactive state transits to the active state, or the tenth message indicates that the at least one MBS which is in the inactive state transits to the active state in the first cell.

In an embodiment of the present application, the apparatus 900 further includes:
a second sending module configured to send a second message to a third network device, wherein the second message indicates that at least one MBS which is in the inactive state transits to the active state, or the second message indicates that at least one MBS which is in the inactive state transits to the active state in the first cell, wherein the third network device is a network device to which the second cell belongs, and at least part of the terminals in the second cell receives the at least one MBS.

In an embodiment of the present application, the apparatus 900 further includes:
a receiving module, configured to receiving a handover request message or a conditional handover request message sent by a third network device, wherein the handover request message or the conditional handover request message carries a handover reason; and
a sending module, configured to send handover configuration information to the third network device.

In an embodiment of the present application, the handover configuration information includes one or more of following: a random access resource dedicated to the first terminal or a random access resource configured for conditional handover, configuration of receiving the at least one MBS, a manner of receiving the at least one MBS being Point To Point (PTP) or Point To Multipoint (PTM).

Optionally, the third network device or the second cell does not support the at least one MBS or the at least one MBS is not in the MBS list in the third network device or the second cell.

The apparatus provided in the embodiments of the present application can implement each process implemented by the method embodiment shown in FIG. 3, and achieve the same technical effect, and in order to avoid repetition, details are not described herein again.

Referring to FIG. 10, an embodiment of the present application further provides a service notification apparatus, applied to a third network device, wherein the apparatus 1000 includes:
a second receiving module 1001 configured to receive a notification message, wherein the notification message indicates that at least one MBS which is in the inactive state transits to the active state; or the notification message indicates that at least one MBS which is in the inactive state transits to the active state in the first cell, wherein the third network device is a network device to which the second cell belongs, and at least part of the terminals in the second cell receives the at least one MBS.

Optionally, the third network device or the second cell does not support the at least one MBS or the at least one MBS is not in the MBS list supported by the third network device or the second cell.

In an embodiment of the present application, the second receiving module 1001 is configured to receive a second message sent by the first network device or the second network device, wherein the second message indicates that at least one MBS which is in the inactive state transits to the active state; or the second message indicates that at least one MBS which is in the inactive state transits to the active state in the first cell. The first network device is a network device of the core network, and the second network device is a network device to which the first cell belongs.

In an embodiment of the present application, the apparatus 1000 further includes:
a determining module configured to determine that at least part of the terminals in the second cell can be handed over to the first cell, wherein a state of the at least part of the terminals is a connected state, and the at least part of the terminals expects to receive at least one MBS or is interested in at least one MBS.

In an embodiment of the present application, the determining module is configured to determine, according to one or more measurement results reported by one or more terminals in the second cell and/or information about whether the second cell can support the at least one MBS, that the at least part of the terminals in the second cell can be handed over to the first cell.

In an embodiment of the present application, the apparatus 1000 further includes:
a third sending module, configured to send an eighth message to a first terminal in a connected state in the second cell, wherein the eighth message indicates that at least one MBS which is in the inactive state transits to the active state, or the eighth message indicates that at least one MBS which is in the inactive state transits to the active state in the first cell..

In an embodiment of the present application, the apparatus 1000 further includes: a third receiving module configured to receive a measurement result of the first cell reported by the first terminal.

In an embodiment of the present application, the apparatus 1000 further includes:
a fourth sending module configured to send a handover request message or a conditional handover request message to the second network device, wherein the handover request message or the conditional handover request message carries a handover reason;
a receiving module configured to receive handover configuration information configured by the second network device.

In an embodiment of the present application, the apparatus 1000 further includes:
a fifth sending module configured to send a ninth message to the first terminal, wherein the ninth message includes one or more of the following:
(1) handover configuration information;
(2) a handover reason;
(3) an event for conditional handover configured by the third network device to the first terminal, and a threshold value corresponding to the event.

Optionally, the handover configuration information may include one or more of the following: a random access resource dedicated to the first terminal or a random access resource for conditional handover, configuration of receiving at least one MBS, a PTP or PTM of at least one MBS.

In an embodiment of the present application, the apparatus 1000 further includes:
a sixth sending module configured to send a third message to a second terminal in an idle state or an inactive state in a second cell, wherein the third message indicates that at least one MBS which is in the inactive state transits to the active state, or the third message indicates that at least one MBS which is in the inactive state transits to the active state in the first cell..

In some optional embodiments, the third message includes one or more of the following:
(1) a parameter of cell reselection of a second terminal receiving at least one MBS;
(2) a manner of receiving the at least one MBS;
(3) a resource of receiving the at least one MBS;
(4) time information of receiving the at least one MBS;
(5) frequency domain information of receiving the at least one MBS.

In an embodiment of the present application, the second receiving module 1001 is configured to receive a fifth message sent by a third terminal in the second cell, wherein the fifth message indicates that at least one MBS which is in the inactive state transits to the active state; or, the fifth message indicates that at least one MBS which is in the inactive state transits to the active state in the first cell. The fifth message includes one or more of following: a cell list supporting at least one MBS, and one or more measurement results of measuring one or more cells in the cell list by the third terminal.

In an embodiment of the present application, the apparatus 1000 further includes:
a seventh sending module configured to, when the third network device fails to receive a cell list supporting at least one MBS, send a sixth message to the first cell or the second network device, wherein the sixth message indicates whether the first cell may support at least one MBS. The sixth message may further include one or more of following: one or more measurement results measured by one or more terminals receiving at least one MBS; and context information of one or more terminals receiving the at least one MBS.

In an embodiment of the present application, the apparatus 1000 further includes:
an eighth sending module configured to, in a case that the third network device receives a cell list supporting at least one MBS, send a seventh message to a second network device to which the first cell supporting the at least one MBS belongs, wherein the seventh message indicates querying whether the third terminal may be handed over to the first cell.

In an embodiment of the present application, the apparatus 1000 further includes:
a handover module configured to in a case that the second network device replies that the first cell supports the at least one MBS, hand over the third terminal to the first cell.

Optionally, the third network device or the second cell does not support the at least one MBS or the at least one MBS is not in the MBS list supported by the third network device or the second cell.

The apparatus provided in the embodiments of the present application can implement each process implemented by the method embodiment shown in FIG. 4, and achieve the same technical effect, and in order to avoid repetition, details are not described herein again.

Referring to FIG. 11, an embodiment of the present application further provides a service notification apparatus, applied to a terminal. The apparatus 1100 includes:
a ninth sending module 1101 configured to receive a fourth message sent by a first network device through a Non-Access Stratum (NAS) or paging message, wherein the fourth message indicates that at least one MBS which is in the inactive state transits to the active state; or the fourth message indicates that the at least one MBS which is in the inactive state transits to the active state in the first cell.

In an embodiment of the present application, the apparatus 1100 further includes:
a tenth sending module, configured to send a fifth message to a third network device of a second cell, wherein the fifth message indicates that at least one MBS which is in the inactive state transits to the active state, or the fifth message indicates that at least one MBS which is in the inactive state transits to the active state in the first cell, and a terminal in the second cell needs to restore receiving the at least one MBS.

The apparatus provided in the embodiments of the present application can implement each process implemented by the method embodiment shown in FIG. 5, and achieve the same technical effect, and in order to avoid repetition, details are not described herein again.

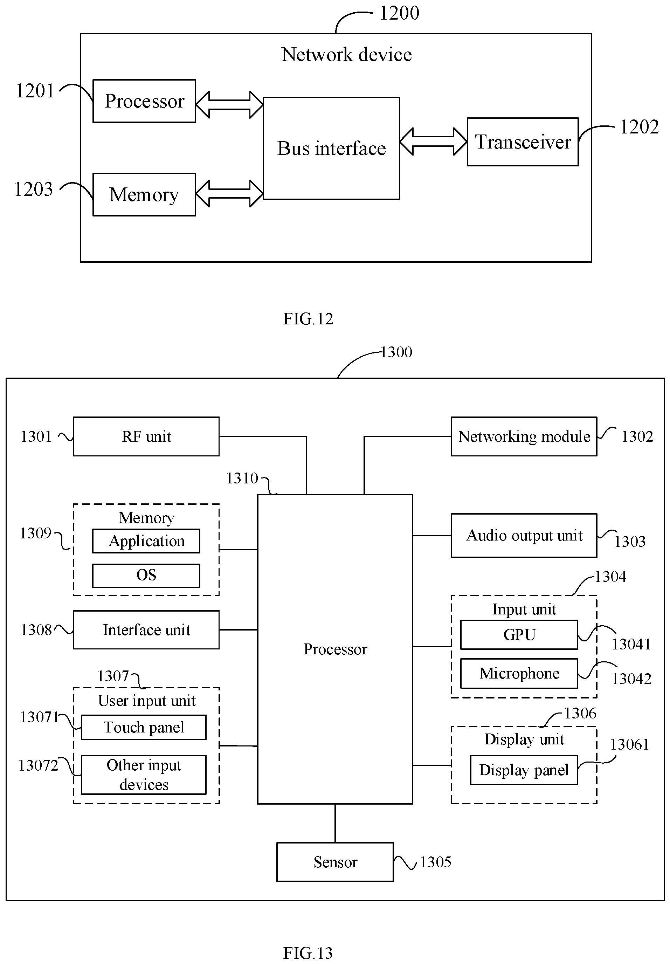

Referring to FIG. 12, FIG. 12 is a structural diagram of a network device according to some embodiments of the present disclosure, as shown in FIG. 12, the network device 1200 includes a processor 1201, a transceiver 1202, a memory 1203, and a bus interface, wherein, in an embodiment of the present disclosure, the network device 1200 further includes a program stored on the memory 1203 and executable on the processor 1201, and when the program is executed by the processor 1201, the steps of the embodiments shown in FIG. 2 to FIG. 4 are implemented.

In FIG. 12, the bus architecture may include any number of interconnected buses and bridges. Specifically, various circuits such as one or more processors represented by the processor 1201 and a memory represented by the memory 1203 are linked together. The bus architecture may also link together various other circuits, such as peripheral devices, voltage regulators, and power management circuits, etc., which are well known in the art, and therefore are not further described herein. The bus interface provides an interface. The transceiver 1202 may be a plurality of elements, i.e., include a transmitter and a receiver, and provide a unit for communicating with various other devices over a transmission medium.

The processor 1201 is responsible for managing a bus architecture and general processing, and the memory 1203 may store data used by the processor 1201 when performing an operation.

The network device provided in this embodiment of the present application can implement each process implemented by the method embodiments shown in FIG. 2 to FIG. 4, and achieve the same technical effect, and in order to avoid repetition, details are not described herein again.

FIG. 13 is a schematic diagram of a hardware structure of a terminal according to some embodiments of the present application, wherein the terminal 1300 includes but is not limited to: a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art may understand that the terminal 1300 may further include a power source (such as a battery) for supplying power to each component, and the power source may be logically connected to the processor 1310 through the power management system, so that functions such as charging, discharging, and power consumption management are managed through the power management system. The terminal structure shown in FIG. 13 does not constitute a limitation on the terminal, and the terminal may include more or fewer components than those shown in the figures, or some components are combined or different component arrangements are provided, which will not be repeated here.

It should be understood that in this embodiment of the present application, the input unit 1304 may include a Graphics Processing Unit (GPU) 13041 and a microphone 13042, and the graphics processor 13041 processes image data of a static picture or a video obtained by an image capturing device (such as a camera) in a video capture mode or an image capture mode. The display unit 1306 may include a display panel 13061, and the display panel 13061 may be configured in the form of a liquid crystal display, an organic light emitting diode, etc. The user input unit 1307 includes a touch panel 13071 and another input device 13072. The touch panel 13071 is also referred to as a touch screen. The touch panel 13071 may include two parts: a touch detection device and a touch controller. The other input devices 13072 may include, but are not limited to, a physical keyboard, a function key (such as a volume control button, a switch button, etc.), a trackball, a mouse, and a joystick, and details are not described herein again.

In this embodiment of the present application, after receiving the downlink data from the network side device, the radio frequency unit 1301 transfers the downlink data to the processor 1310 for processing, and sends the uplink data to the network side device. Generally, the radio frequency unit 1301 includes, but is not limited to, an antenna, at least one amplifier, a transceiver, a coupler, a low noise amplifier, a duplexer, etc.

The memory 1309 may be configured to store software programs or instructions and various data. The memory 1309 may mainly include a program or an instruction area and a storage data area, wherein the program or instruction area may store an operating system, an application program or instruction required by at least one function (such as a sound playing function, an image playing function, etc.). In addition, the memory 1309 may include a high-speed random access memory, and may further include a non-volatile (or non-transitory) memory, wherein the non-volatile (or non-transitory) memory may be a Read-Only Memory (ROM), a Programmable Read-Only Memory (PROM), an Erasable Programmable Read-Only Memory (Erasable PROM, EPROM), an Electrically Erasable Programmable Read-Only Memory (Electrically EPROM, EEPROM), or a flash memory, for example, at least one disk storage device, a flash memory device, or other non-volatile solid state storage device.

The processor 1310 may include one or more processing units; optionally, the processor 1310 may integrate an application processor and a modem processor, wherein the application processor mainly processes an operating system, a user interface, an application program or an instruction, etc. and the modem processor mainly processes wireless communications, such as a baseband processor. It may be understood that the above-mentioned modem processor may also not be integrated into the processor 1310.

The terminal provided in the embodiments of the present application can implement each process implemented by the method embodiment shown in FIG. 5, and achieve the same technical effect, and in order to avoid repetition, details are not described herein again.

Embodiments of the present application further provide a readable storage medium, wherein a program or an instruction is stored on the readable storage medium, and when the program or instruction is executed by the processor, each process of the method embodiments shown in FIG. 1 to FIG. 5 is implemented, and the same technical effect can be achieved. To avoid repetition, details are not described herein again.

The processor is a processor in the terminal in the foregoing embodiment. The readable storage medium includes a computer readable storage medium, such as a computer Read-Only Memory (ROM), a Random Access Memory (RAM), a magnetic disk, or an optical disc.

The steps of the method or algorithm described in connection with the disclosure of the present application may be implemented in hardware, or may be implemented by a processor executing a software instruction. The software instructions may be composed of corresponding software modules, which may be stored in RAM, a flash memory, a ROM, an EPROM, an EEPROM, registers, hard disks, mobile hard disks, read-only optical disks, or any other form of storage medium well known in the art. An exemplary storage medium is coupled to the processor to enable the processor to read information from the storage medium and write information to the storage medium. Certainly, the storage medium may also be a component of the processor. The processor and the storage medium may be carried in an ASIC. In addition, the ASIC may be carried in a core network interface device. Certainly, the processor and the storage medium may also exist in the core network interface device as discrete components.

A person skilled in the art should be aware that, in the foregoing one or more examples, the functions described in the present application may be implemented by hardware, software, firmware, or any combination thereof. When implemented using software, these functions may be stored in a computer-readable medium or transmitted as one or more instructions or codes on a computer-readable medium. A computer-readable medium includes a computer storage medium and a communication medium, wherein the communication medium includes any medium that facilitates transfer of a computer program from one place to another. The storage medium may be any available medium accessible by a general purpose or special purpose computer.

The objectives, technical solutions, and beneficial effects of the present application are further described in detail above, and it should be understood that the foregoing describes merely specific embodiments of the present application, and is not used to limit the protection scope of the present application. Any modification, equivalent replacement, improvement, etc. made on the basis of the technical solutions of the present application shall fall within the protection scope of the present application.

A person skilled in the art should understand that the embodiments of the present application may be provided as a method, a system, or a computer program product. Therefore, the embodiments of the present application may be in the form of an entire hardware embodiment, an entire software embodiment, or an embodiment combining software and hardware. Moreover, the embodiments of the present application may take the form of a computer program product implemented on one or more computer-usable storage media (including but not limited to a magnetic disk memory, a CD-ROM, an optical memory, etc.) including computer-usable program codes.

Embodiments of the present application are described with reference to flowcharts and/or a block diagrams of a method, a device (system), and a computer program product according to some embodiments of the present application. It should be understood that each flow and/or block in the flowcharts and/or block diagrams, and combinations of flows and/or blocks in the flowcharts and/or block diagrams, can be implemented by computer program instructions. These computer program instructions may be provided to a processor of a general purpose computer, a special purpose computer, an embedded processor, or other programmable data processing device to generate a machine such that instructions executed by a processor of the computer or other programmable data processing device generate means for implementing functions specified in one or more flows of the flowcharts and/or one or more blocks of the block diagrams.

These computer program instructions may also be stored in a computer-readable memory that can direct a computer or other programmable data processing device to operate in a particular manner, such that the instructions stored in the computer-readable memory produce a product that includes an instruction device that implements the functions specified in one or more flows of the flowcharts and/or one or more blocks of the block diagrams.

These computer program instructions may also be loaded onto a computer or other programmable data processing device, such that a series of operational steps are performed on a computer or other programmable device to produce a computer-implemented process, such that the instructions executed on the computer or other programmable device provide steps for implementing the functions specified in one or more flows of the flowcharts and/or one or more blocks of the block diagrams.

Obviously, those skilled in the art may make various modifications and variations to the embodiments of the present application without departing from the spirit and scope of the present disclosure. Thus, if these modifications and variations of the embodiments of the present application fall within the scope of the claims of the present application and the equivalent technologies thereof, the present application is also intended to include these modifications and variations.

## Claims

1. A service notification method performed by a first network device, comprising:
sending a notification message, wherein the notification message indicates that at least one Multicast/Broadcast Service (MBS) which is in an inactive state transits to an active state.

2. The method according to claim 1, wherein sending the notification message comprises:
sending a first message to a second network device, wherein the first message indicates that the at least one MBS which is in the inactive state transits to the active state; or, the first message indicates that the at least one MBS which is in the inactive state transits to the active state in a first cell, the first network device is a network device of a core network, and the second network device is a network device to which the first cell belongs;
or,
sending a second message to a third network device, wherein the second message indicates that the at least one MBS which is in the inactive state transits to the active state, or, the second message indicates that the at least one MBS which is in the inactive state transits to the active state in a first cell, the third network device is a network device to which a second cell belongs, at least part of terminals in the second cell receives the at least one MBS;
or,
sending a fourth message to a terminal through a Non-Access Stratum (NAS) or paging message, wherein the fourth message indicates that the at least one MBS which is in the inactive state transits to the active state; or, the fourth message indicates that the at least one MBS which is in the inactive state transits to the active state in the first cell.

3. The method according to claim 2, wherein the first message carries a time length of activation of the at least one MBS.

4. The method according to claim 2, wherein the third network device or the second cell does not support the at least one MBS or the at least one MBS is not in a MBS list supported by the third network device or the second cell.

5. The method according to claim 2, wherein the second message comprises one or more of following:
a time length of activation of the at least one MBS;
information of the first cell, the information of the first cell indicating that the at least one MBS transits to the active state in the first cell;
information of a network device to which the first cell belongs;
time information of receiving the at least one MBS;
frequency domain information of receiving the at least one MBS.

6. The method according to claim 2, wherein sending the fourth message to the terminal through the NAS or paging message comprises:
send the fourth message to the terminal in the first cell or the second cell through the NAS or paging message.

7. The method according to claim 2, wherein the fourth message further comprises: list information of one or more cells supporting the at least one MBS.

8. A service notification method performed by a second network device, comprising:
receiving a notification message, wherein the notification message indicates that at least one Multicast/Broadcast Service (MBS) which is in an inactive state transits to an active state, or the notification message indicates that at least one MBS which is in an inactive state transits to an active state in a first cell; wherein the second network device is a network device to which the first cell belongs.

9. The method according to claim 8, wherein receiving the notification message comprises:
receiving the first message sent by a first network device, wherein the first message indicates that the at least one MBS which is in the inactive state transits to the active state, or the first message indicates that the at least one MBS which is in the inactive state transits to the active state in the first cell, the first network device is a network device of a core network;
or,
receiving a tenth message sent by a terminal in the first cell, wherein the tenth message indicates that the at least one MBS which is in the inactive state transits to the active state, or the tenth message indicates that the at least one MBS which is in the inactive state transits to the active state in the first cell.

10. The method according to claim 8, wherein the method further comprises:
sending a second message to a third network device, wherein the second message indicates that the at least one MBS which is in the inactive state transits to the active state, or the second message indicates that the at least one MBS which is in the inactive state transits to the active state in the first cell, wherein the third network device is a network device to which the second cell belongs, and at least part of terminals in the second cell receives the at least one MBS;
or,
receiving a handover request message or a conditional handover request message sent by a third network device, wherein the handover request message or the conditional handover request message carries a handover reason; and sending handover configuration information to the third network device.

11. The method according to claim 10, wherein the handover configuration information comprises one or more of following:
configuration of receiving the at least one MBS, a manner of receiving the at least one MBS being Point To Point (PTP) or Point To Multipoint (PTM).

12. The method according to claim 10, wherein the third network device or the second cell does not support the at least one MBS, or the at least one MBS is not in a MBS list in the third network device or the second cell.

13. A service notification method performed by a third network device, comprising:
receiving a notification message, wherein the notification message indicates that at least one Multicast/Broadcast Service (MBS) which is in an inactive state transits to a active state, or, the notification message indicates that at least one MBS which is in an inactive state transits to a active state in a first cell, wherein the third network device is a network device to which a second cell belongs, and at least part of terminals in a second cell receives the at least one MBS.

14. The method according to claim 13, wherein the third network device or the second cell does not support the at least one MBS, or the at least one MBS is not in a MBS list supported by the third network device or the second cell.

15. The method according to claim 13, wherein receiving the notification message comprises:
receiving a second message sent by a first network device or a second network device, wherein the second message indicates that the at least one MBS which is in the inactive state transits to the active state; or the second message indicates that the at least one MBS which is in the inactive state transits to the active state in the first cell, the first network device is a network device of a core network, and the second network device is a network device to which the first cell belongs;
or,
receiving a fifth message sent by a third terminal, wherein the fifth message indicates that the at least one MBS which is in the inactive state transits to the active state; or, the fifth message indicates that the at least one MBS which is in the inactive state transits to the active state in the first cell; wherein the fifth message comprises one or more of following: a cell list supporting at least one MBS, and one or more measurement results of measuring one or more cells in the cell list by the third terminal.

16. The method according to claim 15, wherein the method further comprises at least one of following:
determining that at least part of the terminals in the second cell is capable of being handed over to the first cell, wherein a state of the at least part of the terminals is a connected state, and the at least part of the terminals expects to receive at least one MBS or is interested in at least one MBS;
sending an eighth message to a first terminal in a connected state in the second cell, wherein the eighth message indicates that the at least one MBS which is in the inactive state transits to the active state, or the eighth message indicates that the at least one MBS which is in the inactive state transits to the active state in the first cell;
sending a handover request message or a conditional handover request message to the second network device, wherein the handover request message or the conditional handover request message carries a handover reason; and receiving handover configuration information configured by the second network device;
sending a ninth message to the first terminal, wherein the ninth message comprises one or more of following: handover configuration information; a handover reason; an event for conditional handover configured by the third network device to the first terminal, and a threshold value corresponding to the event;
sending a third message to a second terminal in a second cell, wherein the third message indicates that the at least one MBS which is in the inactive state transits to the active state, or the third message indicates that the at least one MBS which is in the inactive state transits to the active state in the first cell;
in a case that the third network device fails to receive a cell list supporting the at least one MBS, sending a sixth message to the first cell or the second network device, wherein the sixth message indicates whether the first cell supports at least one MBS;
in a case that the third network device receives a cell list supporting at least one MBS, sending a seventh message to a second network device to which the first cell supporting the at least one MBS belongs, wherein the seventh message indicates querying whether the third terminal is capable of being handed over to the first cell;
in a case that the second network device replies that the first cell supports the at least one MBS, handing over the third terminal to the first cell.

17. The method according to claim 16, wherein the third message comprises one or more of following:
a parameter of cell reselection of a second terminal receiving the at least one MBS;
a manner of receiving the at least one MBS;
a resource of receiving the at least one MBS;
time information of receiving the at least one MBS;
frequency domain information of receiving the at least one MBS.

18. A service notification method performed by a terminal, comprising:
receiving a fourth message sent by a first network device through a Non-Access Stratum (NAS) or paging message, wherein the fourth message indicates that at least one Multicast/Broadcast Service (MBS) which is in an inactive state transits to an active state, or the fourth message indicates that at least one MBS which is in an inactive state transits to an active state in a first cell.

19. The method according to claim 18, wherein the method further comprises:
sending a fifth message to a third network device of a second cell, wherein the fifth message indicates that the at least one MBS which is in the inactive state transits to the active state, or the fifth message indicates that the at least one MBS which is in the inactive state transits to the active state in the first cell, and at least part of terminals in the second cell receives the at least one MBS.

20. A service notification apparatus applied to a first network device, comprising:
a first sending module configured to send a notification message, wherein the notification message indicates that at least one Multicast/Broadcast Service (MBS) which is in an inactive state transits to an active state.

21. A service notification apparatus applied to a second network device, comprising:
a first receiving module configured to receive a notification message, wherein the notification message indicates that at least one Multicast/Broadcast Service (MBS) which is in an inactive state transits to an active state, wherein the second network device is a network device to which the first cell belongs.

22. A service notification apparatus applied to a third network device, comprising:
a second receiving module configured to receive a notification message, wherein the notification message indicates that at least one Multicast/Broadcast Service (MBS) which is in an inactive state transits to a active state, wherein the third network device is a network device to which a second cell belongs, and at least part of terminals in a second cell receives the at least one MBS.

23. A service notification apparatus applied to a terminal, comprising:
a ninth sending module configured to receive a fourth message sent by a first network device through a Non-Access Stratum (NAS) or paging message, wherein the fourth message indicates that at least one Multicast/Broadcast Service (MBS) which is in an inactive state transits to an active state in a first cell.

24. A network device, comprising:
a processor, a memory, and a program stored on the memory and executable on the processor, wherein when the program is executed by the processor, steps of the method according to any one of claims 1-7 are implemented; or, when the program is executed by the processor, steps of the method according to any one of claims 8-12 are implemented; or, when the program is executed by the processor, steps of the method according to any one of claims 13-17 are implemented.

25. A terminal, comprising:
a processor, a memory, and a program stored on the memory and executable on the processor, wherein when the program is executed by the processor, the processor implements the steps of the method according to claim 18 or 19.

26. A readable storage medium, wherein a program is stored on the readable storage medium, and when the program is executed by a processor, steps of the method according to any one of claims 1-7 are implemented; or, when the program is executed by a processor, steps of the method according to any one of claims 8-12 are implemented; or, when the program is executed by a processor, steps of the method according to any one of claims 13-17 are implemented; or, when the program is executed by a processor, steps of the method according to claim 18 or 19 are implemented.
